# EUROPEAN PATENT APPLICATION

(11) **EP 4 567 668 A1**
(43) Date of publication of application: **11.06.2025**
(21) Application number: 23215145.6
(22) Date of filing: 08.12.2023
(51) Int. Cl.: G06N 3/044, G06N 3/065

(54) **ONE-TRANSISTOR RESERVOIR COMPUTER USING BTI**

(71) Applicant: Imec VZW, 3001 Leuven (BE)
(72) Inventor: DEGRAEVE, Robin, 9840 De Pinte (BE)
(74) Representative: Winger

(57) **Abstract**

A reservoir computing method (700) and related system (100) are disclosed. The reservoir computing system comprises at least one nonlinear compute node (103) with compute node MOSFET (113), a driver circuit(110) coupled to the at least one nonlinear compute node (103), and a readout unit (104) for acquiring an output sequence related to the at least one nonlinear compute node (103). The MOSFET has charge trapping sites located in a gate dielectric and displays bias temperature instability when subjected to voltage stress and threshold voltage recovery after removal of the voltage stress. The driver unit is configured to apply input pulses and readout pulses to a gate of the MOSFET. The readout unit (104) is configured to detect a current through a channel region of the MOSFET while the driver circuit is applying the readout pulses. The readout pulses have a smaller voltage amplitude compared to the input pulses.

## Description

### Field of the invention

The present invention relates to the field of time series processing and related processing systems, in particular to transistor-based reservoir computing methods and systems.

### Background of the invention

Reservoir computing is an alternative compute scheme that exploits the transient behavior of complex dynamical systems. In traditional reservoir computers, a large number of interconnected nonlinear compute nodes form a computing network, i.e. the reservoir, in which complex spatiotemporal patterns are excited through the time-dependent input data. A readout layer is trained to predict future inputs or classify inputs based on the observed patterns in the reservoir, which are elements of a high-dimensional feature space. In contrast to most neural networks, e.g. deep neural networks, convolutional neural network or recurrent neural networks, the internal connections between compute nodes of the reservoir computer are random and left untrained. Due to their large number of compute nodes, traditional reservoir computers are lacking resource-efficiency and compactness. Moreover, true random connections between the compute nodes are difficult to realize in hardware.

In Appeltant, L. et al. "Information processing using a single dynamical node as complex system", Nature Communications, 2:468 (2011), a single-node reservoir computer with delay dynamics has been described. Therein, temporal inputs are first multiplied with a sequence of input weights (mask) and then time-multiplexed to constitute an input stream to the single nonlinear node - an analog electronic oscillator circuit. Outputs from the nonlinear node are placed as virtual nodes (time bins) on a delayed feedback line, from which they can be retrieved by a linear readout layer. More precisely, the readout layer combines the information of many virtual nodes in analogy to the combination of the outputs of many physical nodes by the readout layer of a traditional reservoir computer. This delayed feedback single-node reservoir computer is more resource-friendly than traditional reservoir computers, but requires a complex, dedicated analog electronic oscillator as nonlinear node. Digital-to-analog and analog-to-digital conversion are applied before and after the nonlinearity, respectively. More energy- and area-efficient compute nodes are still desirable.

Du, C. et al. "Reservoir computing using dynamic memristors for temporal information processing", Nature Communications, 8:2204 (2017), discloses a reservoir computer that uses a dynamic array of 88 memristor for direct information processing in the temporal domain. The WOx memristors are selected from a 32x32 crossbar array that has been fabricated on a custommade PCB. A disadvantage of the memristor-based reservoir computer is that it uses non-standard devices and non-standard materials, which makes the integration with mainstream CMOS technology more difficult.

There is a need for energy-efficient reservoir computers that can be easily integrated with existing fabrication technology.

### Summary of the invention

It is an object of embodiments of the present invention to provide energy-efficient nonlinear compute nodes for reservoir computers that can be easily integrated with existing fabrication technology.

The above objective is accomplished by methods and devices according to the present invention.

The bias temperature instability (BTI) effect, negative or positive, is well-known transistor aging and degradation effect, which negatively impacts transistor performance and has the potential of corrupting the proper functioning of transistor-based integrated circuits. Therefore, the BTI effect is commonly perceived as a reliability issue in the design and operation of metaloxide semiconductor field effect transistors (MOSFETs) and related computer hardware, including signal processing circuits. A lot of research efforts have been undertaken to mitigate or suppress this effect, be it through improved device manufacturing and material choices or the addition of dedicated circuitry with the aim of compensating or recovering from the BTI effect. To their great surprise, the inventors have found that the bias temperature instability effect can be beneficial in the context of unconventional computing methods and related systems, in which the cycling-history dependent threshold voltage shift provides the MOSFET both with short-term memory and increased output nonlinearity - two essential properties in the field of reservoir computing.

In one aspect, the invention relates to a reservoir computing method which comprising the following steps:
providing a MOSFET as a nonlinear compute node of a reservoir computing system, the MOSFET comprising a channel region, a gate stack formed over the channel region, and charge trapping sites located in a gate dielectric of the gate stack, the MOSFET thus displaying bias temperature instability when subjected to voltage stress and threshold voltage recovery after removal of the voltage stress, wherein a spectrum of relaxation time constant characterizing the threshold voltage recovery spans multiple decades;
providing a pulse wave representation of a time-dependent input signal to be processed, the pulse wave representation comprising a sequence of input pulses;
applying the sequence of input pulses to a gate terminal of the MOSFET, each input pulse having a voltage amplitude larger than the threshold voltage of the MOSFET, thereby causing a cycling history-dependent shift in said threshold voltage in response to the sequence of input pulses;
acquiring an output sequence related to the nonlinear compute node by repeatedly applying readout pulses to the gate terminal of the MOSFET and simultaneously detecting a current through the channel region of the MOSFET, wherein the readout pulses have a smaller amplitude compared to the input pulses.

In embodiments of the invention, the readout pulses may bias the MOSFET in the subthreshold region. The readout pulses may be applied at regular time intervals.

In another aspect, the invention relates to a reservoir computing system comprising at least one nonlinear compute node, a driver circuit coupled to the at least one nonlinear compute node, and a readout unit for acquiring an output sequence related to the at least one nonlinear compute node. The one or more nonlinear compute nodes each comprise a compute node MOSFET which has a channel region, a gate stack formed over the channel region, and charge trapping sites located in a gate dielectric of the gate stack. The compute node MOSFET thus displays bias temperature instability when subjected to voltage stress and also displays threshold voltage recovery after removal of the voltage stress. A spectrum of relaxation time constant characterizing the threshold voltage recovery spans multiple decades. The driver circuit is configured to encode a time-dependent input signal to be processed by the at least one nonlinear compute node as a sequence of input pulses, e.g. a pulse train, and apply individual input pulses of the sequence of input pulses to a gate terminal of the compute node MOSFET. Each generated input pulse has a voltage amplitude larger than the threshold voltage of the compute node MOSFET. The sequence of input pulses thereby causes a cycling history-dependent shift in the threshold voltage. Threshold voltage shifts are typically bounded and take place between a minimum value for the threshold voltage and a maximum value for the threshold voltage. The driver circuit is further being configured to repeatedly generate and apply readout pulses to the gate terminal of the compute node MOSFET. The readout unit is configured to detect a current through the channel region of the compute node MOSFET while the driver circuit is applying the readout pulses to the gate terminal of the compute node MOSFET. The readout pulses have a smaller voltage amplitude compared to the input pulses.

Embodiments of the invention allow for a resource-friendly implementation of compute nodes in a reservoir computing system. The use of a standard field-effect transistor, e.g. CMOS-MOSFET or CMOS-compatible MOSFET, as a compute node in a reservoir computing system in accordance with embodiments of the invention allows for substantial gains in energy efficiency and area efficiency. Embodiments of the invention have the benefit that they can be easily integrated with existing fabrication technologies such as mainstream CMOS.

Compute nodes in accordance with embodiments of the invention can be advantageously read out in regime of low power consumption, by applying low voltage pulses to the MOSFET gates which operate the MOSFETs in the subthreshold regime or close to the subthreshold regime.

Compute nodes in accordance with embodiments of the invention are inherently provided with short-term memory. Hence, less compute nodes are required in embodiments of the invention compared to the large compute node networks in traditional reservoir computing systems. In some embodiments of the invention, reservoir computing methods can be performed with as little as one single compute node.

It is an advantage of embodiments of the invention that no randomized connections between compute nodes of the reservoir are needed, which are difficult to implement in hardware.

It is a further advantage of embodiments of the invention that MOSFETs as compute nodes provide a strong nonlinearity in their outputs. The readout currents of MOSFETs operated in or near the subthreshold regime depend in a highly nonlinear manner on the immediate threshold voltage of the transistor, which is subjected to shifts as a result of the bias temperature instability (BTI) effect.

Embodiments of the invention using write pulses of constant voltage amplitude have the additional advantage that no dedicated analog electronic circuit needs to be designed for the compute node.

It is an advantage of embodiments of the invention that temporal information evolving at very different timescales can be processed. Time series or time sequences as input signals can be sampled at different speeds and processed, e.g. sampling time intervals ranging from nanoseconds to hours or days. This is a consequence of the broad spectrum of time constants present in the decay characteristics of threshold voltage excursions under the BTI effect.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 shows a reservoir computing system according to a first embodiment.
FIG. 2 is schematic cross-section through a compute node MOSFET in accordance with embodiments of the invention.
FIG. 3 shows the electrical I-V behavior of a compute node MOSFET in accordance with embodiments of the invention for different shifts of the threshold voltage.
FIG. 4 shows a reservoir computing system according to a second embodiment.
FIG. 5 shows a reservoir computing system according to a third embodiment.
FIG. 6 shows a reservoir computing system according to a fourth embodiment.
FIG. 7 and FIG. 8 illustrate the steps of a reservoir computing method in accordance with embodiments of the invention.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art.

In the description provided herein, numerous specific details are set forth. However, it is understood that embodiments of the invention may be practiced without these specific details. In other instances, well-known methods, structures and techniques have not been shown in detail in order not to obscure an understanding of this description.

In the context of the present invention, reservoir computing relates to an unconventional computing method which uses a fixed nonlinear physical systems - referred to as the reservoir or reservoir layer - to map input signals to a higher-dimensional state space for subsequent computation. The input signals are time-dependent signals that continuously disturb the nonlinear physical system, driving it away from a stable point into a transient regime. Subsequent computation generally comprises training the parameters of a readout layer in order to perform signal recognition, classification or prediction tasks, or generate rhythmic output patterns. The transient signals from the reservoir serve as observations (training data) for the training of the readout layer. A reservoir typically comprises one or multiple nonlinear units, hereinafter referred to as nonlinear compute nodes

In a first aspect, the present invention relates to a reservoir computing system for the processing of temporal information, which comprises at least one nonlinear MOSFET-based compute node. Here temporal information generally relates to any kind of time-dependent signal, continuous-time or discrete-time signals, which can be expressed as a time series, time sequence or data stream. This includes static spatial data such as images or video frames that have been serialized into a data stream, e.g. bit stream representative of the pixels from a raster scan of the image or video frame.

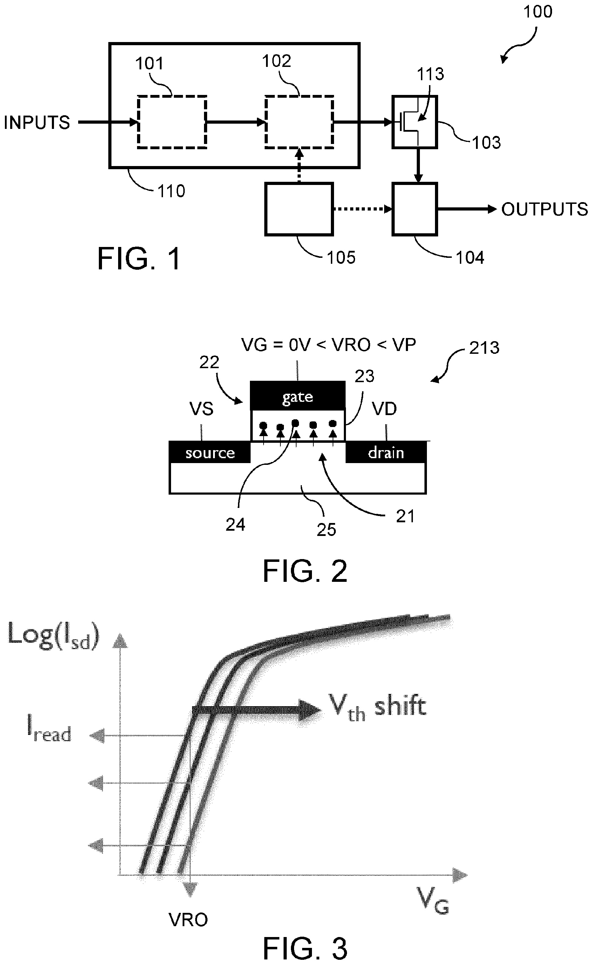

FIG. 1 shows a reservoir computing system 100 according to a first embodiment. The reservoir computing system 100 comprises a nonlinear compute node 103, a driver circuit 110 coupled to the nonlinear compute node 103, a readout unit 104 coupled to the nonlinear compute node 103, and a control unit 105 coupled to the driver circuit 110 and the readout unit 105. The control unit is capable of setting the driving circuit's mode of operation through appropriate control signals, which can be toggled between a write mode and read mode.

An output of the driver circuit 110 is coupled to a gate terminal of a compute node metaloxide semiconductor field-effect transistor (MOSFET) 113, whereas the readout unit 105 is connected to one of the source/drain terminals of the compute node MOSFET 113. The driver circuit 110 receives time-dependent signals (e.g., time series, temporal data sequence or timevarying data stream) as system inputs and, when operated in the write mode, is configured to encode the system inputs into a pulse sequence, e.g., a digital representation of the input data by means of pulses in a pulse wave or a pulse-based digital representation of features extracted from the input data. Existing pretrained feature extractors can be used to extract a set of features from the input data, or even fine-tuned for their particular use with MOSFET-based compute nodes. Furthermore, the driver circuit 110 is adapted to generate voltage pulses in accordance with the pulse-encoded input data and deliver the generated voltage pulses to the gate of the compute node MOSFET 113, when operated in the write mode. Conversely, the driver circuit 110 is configured to repeatedly generate a readout pulse at regular time intervals when operated in the read mode, e.g. at least one readout pulse after a predetermined number of sampling time steps with respect to the input signal (e.g. one readout pulse after each sampling time step). As will be explained further below, the voltage amplitude of input pulses, also referred to as write pulses, has to exceed the immediate threshold voltage of the compute node MOSFET 113 so that the MOSFET is switched on and the threshold voltage starts drifting due to the BTI effect. This can be ensured by raising the write pulses to a high enough voltage level 'VP' that is larger than the expected maximum for the shifted threshold voltage under the BTI effect. Compared to the readout pulses, a voltage amplitude and/or duration of the input pulses is larger. The driver circuit 110 may generate readout pulses that have a voltage amplitude smaller than or slightly above the threshold voltage of the computer node MOSFET 113, e.g. smaller than or slightly above the minimum attainable threshold voltage of the computer node MOSFET 113, e.g. the initial or smallest threshold voltage of the MOSFET that can be recovered after very long relaxation time intervals. This allows for a substantial reduction in the amount of readout current flowing through the channel of the compute node MOSFET 113 and leads to energy savings. This is particularly the case if readout pulses have a voltage amplitude below the threshold voltage of the compute node MOSFET 113 such that the MOSFET 113 is operated in the subthreshold regime.

Time-dependent information contained in the system inputs may be encoded into at least one of the following variables characterizing the pulse sequence: pulse amplitude, pulse duration, pulse interval, pulse position, pulse shape (e.g. triangular vs. trapezoidal), or pulse density. In some embodiments of the invention, the time-dependent information is encoded into multiple variables of the pulse sequence, e.g. pulse amplitude and pulse duration. An encoding scheme with constant write pulse amplitude is preferable for digital implementations. However, encoding scheme that use pulse amplitude modulation in conjunction with analog driver circuits are feasible too. The magnitude of system input data points is then represented, fully or partially, by the amplitude of the write pulses. Furthermore, the selection of the write pulse voltages has the added benefit that the time constants of the responding defects in the gate dielectric of the MOSFET can be modified in a controlled way, which allows for tuning the BTI effect to a specific input sequence. Every dataset type of interest may be associated with a corresponding optimal voltage for the write pulses. This way, the same reservoir computing hardware can be used for many different applications.

Continuous-time signals may be sampled and quantized, or discrete-time signals resampled, by the driver circuit 110 prior to the translation into a pulse sequence. Alternatively, separate sampling and/or quantizer units may be provided. In the present embodiment, the driver circuit comprises an encoder unit 101 and a pulse generator unit 102 as subcomponents, but such a distinction may not be necessary in alternative embodiments. The encoder unit 101 is configured to encode the system inputs as a digital pulse train and the pulse generator unit is configured to drive the compute node MOSFET 113 in accordance with the digital pulse train when the compute node 103 is operated in the write mode, e.g., by generating a corresponding sequence of voltage pulses and applying the individual voltage pulses to the gate terminal of the compute node MOSFET 113. During the read mode, the pulse generator unit 102 is configured to generate one or more readout pulses at the corresponding readout voltage level and apply the readout pulses to the gate of the compute node MOSFET 113. In alternative embodiments of the invention, a separate pulse generator or drive circuit may be provided in addition to the drive circuit 110, as a means for supplying the readout pulses in the readout mode. In embodiments of the invention in which the system inputs are already supplied in the form of a pulse train, the encoder unit 101 may be omitted or skipped. The readout mode can be triggered repeatedly by control unit 105 at regular time intervals, e.g. through a read interrupt signal that is generated if a clocked counter reaches a predetermined number of counts. Hardware implementations of the driver circuit include but are not limited to existing control circuitry for pulse-width modulation and/or pulsecode modulation.

The readout unit 104 is configured to detect a current through the channel region of the compute node MOSFET 113 while the driver circuit 110 is applying the readout pulses to the gate terminal of the compute node MOSFET 113, e.g. during the read mode. A readout cycle can be initiated by an interrupt signal that is timely issued by the control unit 105. Under the repeated current measurements, the readout unit 104 acquires an output sequence related to the at least one nonlinear compute node 103. This output sequence corresponds to the processed version of the input signal, the processing being performed by the nonlinear electrical characteristics of the compute node MOSFET 113, which depend directly on the amount of threshold voltage shift and, by virtue of the threshold voltage shift dependence on the cycling-history, indirectly also on the input history. During the readout cycle, the compute node MOSFET 113 experiences insignificant amounts of voltage stress, or no voltage stress at all. Hence, the immediate threshold voltage of the compute node MOSFET 113 remains nearly unaffected or does not shift at all. Hardware implementations of the readout unit include but are not limited to existing circuitry for current sensing, e.g., current sense amplifiers. Alternatively or additionally, the readout unit 104 may also comprise a current-to-voltage converter (e.g. transimpedance amplifier) and/or an analog-to-digital converter. Hence, the output sequence obtained by the readout unit may be a current or a voltage signal, in the digital or the analog domain.

The particular output format (current or voltage, digital or analog) may be determined in accordance with the requirements of any optional neural network layer such as a readout layer (liner regression, ridge regression, logistic regression) or hidden layer of a subsequent neural network. The data points of the output sequence - as computed by the nonlinear compute node in response to the system input signal - are the components of a state space vector of the reservoir computing system. This state space vector can be interpreted as a higher-dimensional feature vector in the reservoir computation space. Output sequence can be output directly or are optionally subjected to further processing. e.g., used as inputs to a readout layer or hidden neural network layer.

With reference to FIG. 2, a schematic cross-section through a compute node MOSFET in accordance with embodiments of the invention is shown. The MOSFET 213 comprises source and drain regions and related contact terminals, a channel region 21, and a gate stack 22 formed over the channel region 21. In the inversion regime of the MOSFET 213, the channel region 21 is induced by an applied gate voltage 'VG' which is exceeding a threshold voltage 'VT' for the transistor device. The conductive channel region 21 may be located adjacent to the interface with the gate stack 22 or may be buried in the substrate 25. Charge trapping sites 24 as defects are located in a gate dielectric 23 of the gate stack 22, e.g. within the volume of the gate dielectric and/or at the interface between the gate dielectric 22 and the substrate 25. The compute node MOSFET 213 thus is subjected to the bias temperature instability (BTI) effect under applied voltage stress and experiences threshold voltage recovery after removal of the voltage stress. In embodiments of the invention, a spectrum of relaxation time constant characterizing the threshold voltage recovery spans multiple decades. As a matter of fact, different defects are associated with different capture and emission rates, hence different time scales, and the sum of all defects gives rise to the broad spectrum of relaxation. The different capture and emission rates are determined by the structural properties of the defect and its position with respect to the channel region. The wide time scale range typically stems from the amorphous nature of the gate dielectric, e.g. an oxide. Here, a multiple decade spanning relaxation spectrum may range from nanoseconds or microseconds to seconds, hours and even months, e.g. encompass six decades or more, e.g. ten decades or more, e.g. twelve decades or more.

In preferred embodiments of the invention, the MOSFET 213 is of the pMOS-type. The positive BTI effect in pMOS-type MOSFETs is very pronounced in scaled fabrication technologies, especially the ones that use high-k based gate dielectrics, and at gate voltages slightly higher than the nominal operation voltage. This enhances the short-term memory capacity and the nonlinear behavior of the MOSFET - two properties that are of fundamental importance in the framework of reservoir computing. Nevertheless, the BTI effect can also be obtained in nMOS-type MOSFETs. It is understood that write pulse voltage levels 'VP' and readout pulse voltage levels 'VRO' are negative in the case of pMOS-MOSFETs, but positive for nMOS-MOSFETs, and that the threshold voltage increases in absolute terms (i.e. the magnitude increases regardless of the sign) under voltage stress. The gate dielectric of the gate stack may comprise an oxide, e.g. thermal SiOx, a high-k material such as HfOx, a nitride (e.g. SiN) or oxynitride. In contrast to FETs based on 2D semiconductors, which require sheets (e.g. monolayer sheet) of unconventional semiconductor materials like graphene or dichalcogenides and therefore are difficult to integrate with existing fabrication technology like mainstream CMOS, the channel region of the compute node MOSFET comprises a bulk, i.e. 3D, semiconductor material.

FIG. 3 shows the electrical I-V behavior of the compute node MOSFET for three different shifts of the threshold voltage. The abscissa indicates the gate voltage (arbitrary units) and the ordinate the source-drain current flowing through the MOSFET channel region (log-scale; arbitrary units). All three curves reveal a sharp increase in the conducted source-drain current when the applied gate voltage 'VG' approaches the immediate threshold value 'Vth' and an onsetting saturation of the source) drain current above the threshold voltage. The increased current flow through the MOSFET channel is accompanied by an increase in the conductance of the MOSFET; the MOSFET is switched from a low conductance state to a high conductance state. In the context of the present invention, a voltage pulse that induces the switching from the low conductance state to the high conductance state is also referred to as a write pulse or switching pulse. For instance, in typical pMOS-type MOSFETs the shifting threshold voltage may be in the range from -0.1 V to -0,5 V, whereas write pulses are applied with a -1.5 V amplitude. Reducing the gate voltage below the immediate threshold voltage 'Vth', the source-drain current magnitudes decreases exponentially fast. In the subthreshold region, the MOSFET only conducts a very small amount of leakage current through the channel region, e.g. less than 10 nA, e.g. less than 1 nA, e.g. between 1 nA and a few picoamperes. The MOSFET is a volatile switch as information stored in the conductance state is inevitably lost in the absence of a gate voltage. A number of charged defects in the gate dielectric or at the gate dielectric interfaces determines the amplitude of the immediate threshold voltage, as well as the magnitude of the source-drain current in the readout mode. At constant readout voltage 'VRO' for the readout pulses applied during the readout cycles, even a small shift in the MOSFET's threshold voltage causes a substantial change in the amount of subthreshold current 'Iread' that is detected during the readout operation. Therefore, cycling history-dependent changes in the threshold voltage of the compute node MOSFET enhance the nonlinear output behavior of the compute node and enable the separation of different system input signals even if the differences are small. The precise value of the readout voltage 'VRO' depends on the details of the MOSFET as well as the speed and sensitivity requirements of the readout unit, which may vary from application to application. A typical readout current 'Iread' would be in the nanoampere range, e.g. ~10 nA.

It is understood from the electrical properties of FIG. 3 that the MOSFET displays switching behavior from a low conductance state to a high conductance state upon application of a write pulse to the MOSFET gate and from the high conductance state back to the low conductance if the applied voltage signal is removed again or becomes insignificantly small compared to the threshold voltage. This completes one switching cycle during which the MOSFET is subjected to voltage stress and defect sites in the gate dielectric are trapping mobile charge carriers that are attracted from the channel region underneath. In between successive switching cycles, at least some of the trapped charges are released and the charged defect sites become neutral again, thereby causing the relaxation of the threshold voltage, which means that the value of the threshold voltage is drifting as a function of the relaxation time. Here, relaxation time refers to the time period during which the MOSFET is not subjected to any above threshold voltage stress, e.g. the time interval between successive switching cycles as determined by respective switching pulses. At the end of each relaxation time interval, the threshold voltage of the MOSFET will have moved to a new immediate threshold voltage level 'Vth', just before it is being increased again by the next write pulse. For the MOSFET, a decrease of the threshold voltage towards its initial value is observed with increasingly long intervals of relaxation time. Interestingly, threshold voltage relaxation is observable over a wide spectrum of relaxation time intervals, e.g., reaching from short time intervals of a few nanoseconds to longer time intervals in the millisecond and second range and up to very long time intervals ranging from hours to days and even months. In other words, the timescales of the threshold voltage relaxation dynamics span many decades. This has the advantage that as-fabricated MOSFETs can process input data sequences that have very different timescales. Furthermore, the relaxation dynamics of the threshold voltage are also dependent on the cycling history, i.e. the number, timing and duration of all past write pulses.

In embodiments of the invention, pulse amplitudes and/or durations preferably are chosen small enough to prevent or minimize any permanent damage of the gate dielectric of the MOSFET and hence any permanent shift of the threshold voltage. Nonetheless, an initially and/or regularly performed calibration step also allows cancellation of any persistent shifts in threshold voltage of the MOSFET device.

The phenomena of threshold voltage relaxation and cycling history dependence in MOSFETs are generally perceived as reliability issues, as they would impair the optimal functioning of the switch. Their reduction or elimination is constantly sought after. The inventors found that, contrary to the common prejudice, these phenomena can be advantageously put to use in compute nodes of reservoir computing systems that operate on time sequences, e.g. sequential input data or time series. Remarkably, the threshold voltage relaxation of the MOSFETs confers short-term memory upon the reservoir compute nodes, whereas the cycling history dependence of the threshold voltage shift endows the reservoir compute nodes with the capability to separate different input data sequences. Moreover, the source-drain current in the sub-threshold region of the MOSFET is a nonlinear function (e.g. exponential function) of the difference between the immediate threshold voltage and the applied readout voltage during a readout cycle. This advantageously amplifies differences that exist between separable input data sequences. Here, the nonlinearity of the readout in the sub-threshold region further enhances the inherently nonlinear and stochastic behavior of the threshold voltage shifts. A readout voltage pulse can be sufficiently short (e.g. about 1 µs or less, e.g. about 1 ns or less) and has lower amplitude than a write pulse. Hence, minimal stress is exerted on the MOSFET and the threshold voltage relaxation dynamics are only minimally disturbed, or not affected at all, by the application of the readout pulses. The preceding properties - short-term memory, input separability and nonlinearity in the outputs - are frequently referred to as the fundamental compute properties in the context of transient signal computing, reservoir computing and echo state networks. In this sense, each as-fabricated MOSFET can be used in a compute node for temporal signal processing, wherein the internal dynamics of the threshold voltage are a state variable of the compute node that influences the nonlinear input-output behavior (transfer function) of the node. As explained above, input data sequences with very different timescales can be processed.

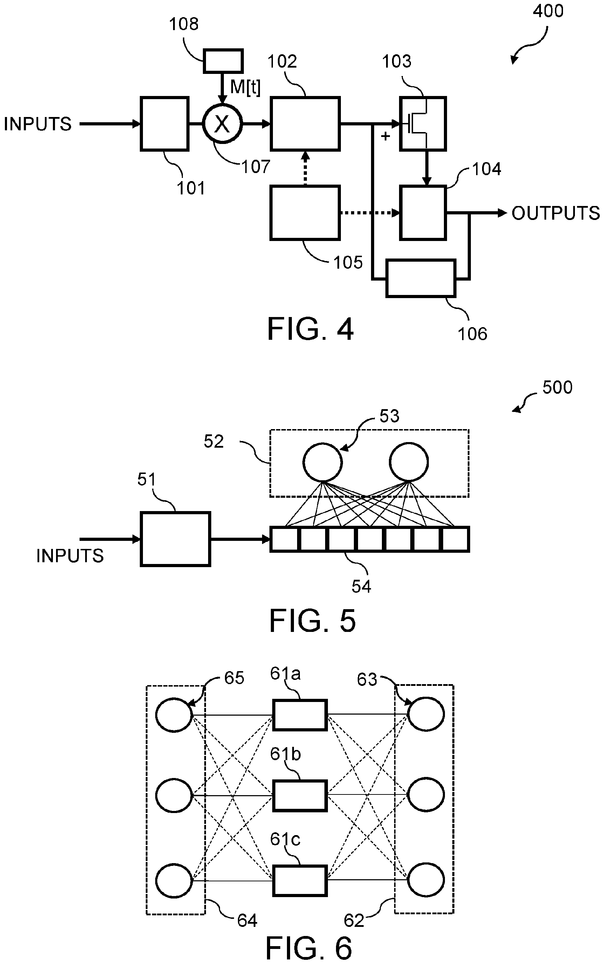

FIG. 4 shows a reservoir computing system 400 according to a second embodiment. The reservoir system 400 differs from the reservoir system of the first embodiment in that a delay line 106 is connected between the output of the readout unit 104 and the gate terminal of the compute node MOSFET. This additional delayed feedback has the advantage of enriching the dynamic behavior of the nonlinear compute node and the reservoir computer as a whole. Moreover, the delayed feedback can be combined with the masking of the inputs as taught in Appeltant, L. et al. "Information processing using a single dynamical node as complex system", Nature Communications, 2:468 (2011). In this case, a delay time interval is attributed to the delay line 106 and subdivided into a polarity of virtual nodes, i.e. physical nodes that have been mapped onto the time domain. The output sequence obtained by the readout unit 104 is translated into a sequence of virtual nodes travelling around the delay line 106 from which they can be tapped out. A pattern generator 108 is configured to repeatedly generate the items of a masking sequence M[t], here the bits of a binary masking sequence, which are used by a modulator or multiplier unit 107 to modulate each pulse of the pulse train. This has the effect of projecting each data point of the input signal into a higher-dimensional input space. The time slot assigned to each item of the masking sequence corresponds to the time duration of one virtual node. The resulting masked pulse sequence is processed by the nonlinear compute node, time slot per time slot, and the corresponding outputs are placed onto the delay line 106 in order to populate the virtual nodes. Although shown as a digital masking sequence in the present embodiment, an analog masking scheme can be implemented in alternative embodiments of the invention, which is used to modulate the data points of the system input signal rather than the pulse sequence derived therefrom. A buffered or unbuffered delay line, data buffer (e.g. FIFO buffer), or other delay circuits may be used to implement the delay line 106.

FIG. 5 shows an expanded reservoir computing system 500 according to a third embodiment. The expanded reservoir computing system 500 comprises a reservoir subsystem 51 that may be selected as any one of the previously described embodiments or variants thereof. Additionally, the expanded reservoir computing system 500 comprises an output buffer 54 which stores a part or the whole of the output sequence obtained by the readout unit for the purpose of further processing by a readout layer 52. The readout layer 52 comprises one or multiple output neurons 53 and trainable weighted connections to each element of the output sequence that is currently stored in the output buffer 54. In embodiments of the invention, the output buffer may be a FIFO-type buffer, shift register or buffered delay line. The output buffer 54 can be flushed at regular time intervals to allow storing a new output sequence or part of an output sequence, or a stored element is pushed out of the output buffer 54 each time a freshly obtained readout element of the output sequence arrives. The readout layer 52 may be a regression layer. Additional neural network layers may be appended to the readout layer 52 in variants of this embodiment.

The reservoir computing system according to embodiments accepts scalar-valued temporal data or data-carrying signals. Vector-valued signals can be serialized in embodiments of the invention, either by concatenation of the vector signal components, i.e. appending the time signal of each component in order to obtain a longer scalar time signal, or by time-multiplexing the vector signal components, or else may be processed component-wise in parallel. In the latter case, the components of the scalar implementation of the reservoir computing system described hereinabove can be replicated to provide full support for vector input signals.

FIG. 6 shows a multi-node reservoir computing system 600 according to a fourth embodiment. The expanded reservoir computing system 600 comprises multiple independent reservoir subsystem 61a-61c that may be selected as any one of the previously described embodiments of FIG. 1 and FIG. 4, or variants thereof. Multiple input signals, or components of a vector input signal, may be supplied in parallel to respective input units 63 of an input layer 62. Each input unit 63 of the input layer 62 may be connected to exactly one reservoir subsystem 61a-61c for an independent treatment of the multiple input signals or input signal components. Alternatively, input units 63 of the input layer 62 may be connected to several reservoir subsystem 61a-61c, e.g. to obtain linear combinations of the multiple input signals or input signal components prior to processing by the nonlinear compute nodes. Similarly, a readout layer 62 comprising one or more output neurons 63 may be provided to combine and further process the individual output sequences obtained by the reservoir subsystem 61a-61c. A readout weight is associated with each connection in the readout layer 62 for weighting the corresponding data point of the output sequence, thus obtaining a sequence of weighted outputs, and the weighted outputs of the sequence of weighted outputs are combined into one or multiple output variables by the respective output neurons 63. The readout layer 62 may combine the output sequences of the reservoir subsystems data point per data point or may combine collections of data points, e.g. subsequences, stemming from each reservoir subsystem as explained in relation to the preceding embodiment of FIG. 5. The output variables can be used for regression, prediction or classification tasks, depending on the desired application.

In embodiments of the invention comprising a collection of independently operating MOSFET-based compute nodes, each compute node may receive the digital representation of a different feature as pulse wave. The driver circuits for the respective MOSFET-based compute nodes may include a hardware implementation of a trained feature extractor, such as a hardwareimplemented neural network, in the case that input data to the reservoir computing system does not represent extracted features but is closer to a raw data format. This advantageously increases the dimensionality of the readout and hence the signal separation capability of the reservoir computing system.

In preferred embodiments, the reservoir computing system is provided as a single electronic article, e.g. an integrated circuit or semiconductor chip. Nonetheless, parts of the driver circuit and/or any further processing units related to the output sequences may be implemented on a different device, for instance on a server or dedicated hardware of an external service provider (e.g. cloud computing hardware). By way of example, the encoder unit may be remotely implemented for the purpose of speeding up the encoding of system inputs into digital pulse trains or acquiring and storing the digital pulse trains corresponding to many input signals with the goal of creating a faster to process training data set. Likewise, the output sequences stemming from many different distributed nonlinear compute nodes may be transmitted to an external computer, where they are combined for the purpose of training a readout layer or subsequent layers of a neural network. Providing a single device has the advantage that no transmission of encoded input signals of a training data set over vulnerable networks to a distant server is necessary. This is particularly relevant in the context of training data that contains private or sensitive information. Besides, the communication overhead and network latency are avoided in this case.

Embodiments described so far relate to enhancement-type compute node MOSFETs. However, any practitioner in the art recognizes that the same beneficial effects can be achieved in depletion-type MOSFETs without having to exercise any inventive skill.

In a further aspect of the present invention, a reservoir computing method is disclosed which uses a compute node MOSFET in accordance with embodiments of the previous aspect.

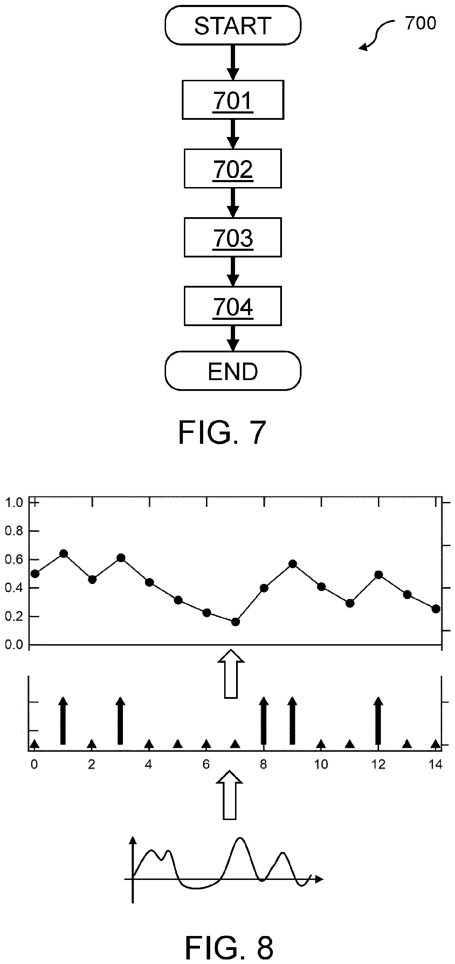

FIG. 7 and FIG. 8 illustrate the steps of a reservoir computing method 700 in accordance with embodiments of the invention. In a first step 701, a MOSFET is provided as a nonlinear compute node of a reservoir computing system, which comprises a channel region, a gate stack formed over the channel region, and charge trapping defect sites located in a gate dielectric of the gate stack. Hence, the MOSFET displays bias temperature instability when subjected to voltage stress and threshold voltage recovery after removal of the voltage stress. The spectrum of relaxation time constant characterizing the threshold voltage recovery spans multiple decades.

Next, a pulse wave representation of a time-dependent input signal to be processed is provided in step 702. Here, a pulse wave representation comprises or consists of a sequence of input pulses which represent the time information contained in the input signal. This step may further include at least one of the following sub-steps: encoding the time-dependent input signal into a sequence of input pulses, sampling a continuous-time input signal or resampling a discrete-time input signal, converting an analog input signal into a digital input signal. The bottom part and the middle part of FIG. 8 show a time-dependent input signal and its pulse wave representation respectively. Tall arrows represent the presence of a write pulse at a given time step of the input signal, e.g. sampling time steps, whereas short arrows are chosen to indicate the absence of a write pulse. Known pulse encoding techniques may be used to represent the input signal as a pulse wave.

The sequence of input pulses is then applied to a gate terminal of the MOSFET in step 703, wherein a voltage amplitude of each input pulse is larger than the threshold voltage of the MOSFET. The delivery of each input pulse constitutes a write cycle during which the MOSFET is subjected to voltage stress. When no input pulse is present for a particular time step or over an extended period of time steps, the threshold voltage of the MOSFET starts relaxing towards its initial value. This causes a cycling history-dependent shift in the threshold voltage, e.g. as shown in the top part of FIG. 8. Preferably, the sequence of input signals is a digital signal so that no analog circuitry is required when driving the gate terminal of the MOSEFT, knowing that analog circuitry is harder to design and implement compared to a digital one. During this step, the source/drain terminals of the MOSFET may be connected to ground, avoiding power dissipation in the MOSFET. Alternatively, a small voltage differential may be applied between the drain and source terminal in order to induce a small current flow through the channel region of the MOSFET, which can be used for monitoring purposes.

Next, an output sequence related to the nonlinear compute node is acquired during step 704, by repeatedly applying readout pulses to the gate terminal of the MOSFET and simultaneously detecting a current through the channel region of the MOSFET. The readout pulses have a smaller amplitude compared to the input pulses and preferably are also shorter than the write pulses. In some embodiments, the readout pulse amplitude biases the MOSFET in the subthreshold condition and the detected channel current is a subthreshold current. In other embodiments, the readout pulse amplitude biases the MOSFET just above the subthreshold condition. Readout pulses may be applied at regular time intervals, e.g. at each sampling time step or after a predetermined number of time steps. Readout cycles may be timed short enough to supply a readout pulse between two consecutive write pulses, but it is possible to interrupt write cycles at any time by a programmed readout pulse. During this step, a small voltage differential is applied between the drain and source terminal, e.g. V(DS) ~ 0.05 V, in order to induce a small readout current flow (e.g. ~10 nA) through the channel region of the MOSFET.

Optionally, the reservoir computing method may comprise an initialization step for the MOSFET, during which the threshold voltage shift and the relaxation time constants are tuned to their desired values. To this end, positive and/or negative voltage pulses of different duration and/or amplitude may be applied to the gate of the MOSFET.

Furthermore, readout weights can be applied to the output sequence in a further optional step to obtain a sequence of weighted outputs. A plurality of weighted outputs of the sequence of weighted outputs can then be combined into one or multiple output variables. This enables the learning and performing regression or classification tasks based on the detected output currents.

In some embodiments of the invention, the reservoir computing method may comprise the additional steps of an input masking scheme:
- sampling the input signal to obtain a plurality of sampled data points, or providing the input signal as a discrete time series comprising a plurality of sampled data points, wherein two successive data points are separated by a sampling time interval,
- multiplying mask weights of an alternating pattern of mask weights with each sampled data points of the input signal or the pulse sequence derived from the input signal, thus obtaining a masked input signal or masked pulse sequence, wherein a fixed time slot is allotted to each mask weight, the fixed time slot being a fraction of the sampling time interval.

Reservoir computing methods in accordance with embodiments of the invention may also comprise the step of feeding the obtained output sequence back to the gate terminal of the MOSFET of this compute node or a different compute node, where necessary comprising a preceding current-to-voltage conversion step.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A reservoir computing method (700) comprising the steps of:
providing a MOSFET (701) as a nonlinear compute node of a reservoir computing system, the MOSFET comprising a channel region, a gate stack formed over said channel region, and charge trapping sites located in a gate dielectric of said gate stack, said MOSFET thus displaying bias temperature instability when subjected to voltage stress and threshold voltage recovery after removal of the voltage stress, wherein a spectrum of relaxation time constant characterizing said threshold voltage recovery spans multiple decades,
providing a pulse wave representation (702) of a time-dependent input signal to be processed, said pulse wave representation comprising a sequence of input pulses,
applying the sequence of input pulses (703) to a gate terminal of the MOSFET, each input pulse having a voltage amplitude larger than the threshold voltage of the MOSFET, thereby causing a cycling history-dependent shift in said threshold voltage in response to said sequence of input pulses,
acquiring an output sequence (704) related to the nonlinear compute node by repeatedly applying readout pulses to the gate terminal of the MOSFET and simultaneously detecting a current through the channel region of the MOSFET, wherein the readout pulses have a smaller amplitude compared to the input pulses.

2. The method of claim 1, wherein the readout pulses bias the MOSFET in the subthreshold region.

3. The method of any one of the preceding claims, wherein the readout pulses are applied at regular time intervals.

4. The method of any one of the preceding claims, wherein source/drain terminals of the MOSFET are connected to ground during application of the input pulses and a voltage differential is applied between said source/drain terminals during application of the readout pulses.

5. The method of any one of the preceding claims, further comprising:
applying readout weights to the output sequence, thus obtaining a sequence of weighted outputs, and combining a plurality of weighted outputs of said sequence of weighted outputs into one or multiple output variables.

6. The method of any one of the preceding claims, further comprising:
sampling the input signal to obtain a plurality of sampled data points or providing the input signal as a discrete time series comprising a plurality of sampled data points, wherein two successive data points are separated by a sampling time interval,
multiplying mask weights of an alternating pattern of mask weights with each sampled data points of the input signal, thus obtaining a masked input signal, wherein a fixed time slot is allotted to each mask weight, the fixed time slot being a fraction of the sampling time interval.

7. The method of any one of the preceding claims, wherein the step of providing the pulse wave representation of the time-dependent input signal comprises encoding the time-dependent input signal into a digital pulse train.

8. A reservoir computing system (100; 400; 500; 600) comprising:
at least one nonlinear compute node (103) comprising a compute node MOSFET (113), the compute node MOSFET comprising a channel region, a gate stack formed over said channel region, and charge trapping sites located in a gate dielectric of said gate stack, said compute node MOSFET thus displaying bias temperature instability when subjected to voltage stress and threshold voltage recovery after removal of the voltage stress, wherein a spectrum of relaxation time constant characterizing said threshold voltage recovery spans multiple decades,
a driver circuit(110) coupled to the at least one nonlinear compute node (103) and configured to encode a time-dependent input signal to be processed by the at least one nonlinear compute node as a sequence of input pulses and apply individual input pulses of the sequence of input pulses to a gate terminal of the compute node MOSFET (113), each input pulse being generated at a voltage amplitude larger than the threshold voltage of the compute node MOSFET, thereby causing a cycling history-dependent shift in said threshold voltage in response to said sequence of input pulses, said driver circuit (110) further being configured to repeatedly generate and apply readout pulses to the gate terminal of the compute node MOSFET (113),
a readout unit (104) for acquiring an output sequence related to the at least one nonlinear compute node (103), the readout unit (104) being configured to detect a current through the channel region of the compute node MOSFET (113) while the driver circuit (110) is applying the readout pulses to the gate terminal of said compute node MOSFET, wherein the readout pulses have a smaller voltage amplitude compared to the input pulses.

9. The reservoir computing system of claim 8, the driver circuit (110) being further configured to generate the readout pulses at a subthreshold voltage amplitude for biasing the compute node MOSFET (113) in the subthreshold region.

10. The reservoir computing system of claim 8 or 9, wherein the compute node MOSFET (113) is of the PMOS-type and/or comprise a high-k material as the gate dielectric.

11. The reservoir computing system (400) of any one of claims 8 to 10, further comprising a delay line (106) arranged between the readout unit (104) and the nonlinear compute node (103).

12. The reservoir computing system (400) of any one of claims 8 to 11, further comprising a masking unit (107, 108) configured to multiply mask weights of an alternating pattern of mask weights with each data point of a plurality of sampled data points derived from the input signal, wherein the masking unit is further configured to allot a fixed time slot to each mask weight, the fixed time slot being a fraction of a sampling time interval separating two successive data points of the plurality of sampled data points.

13. The reservoir computing system (500) of any one of claims 8 to 12, further comprising a readout layer (52) configured to apply readout weights to the output sequence related to the at least one nonlinear compute node, thus obtaining a sequence of weighted outputs, and combining a plurality of weighted outputs of said sequence of weighted outputs into one or multiple output variables.

14. The reservoir computing system (600) of claim 13, comprising a plurality of nonlinear MOSFET-based compute nodes, wherein the readout layer (62) is configured to apply readout weights with respect to the output sequences of multiple nonlinear compute nodes and combine the weighted outputs of multiple sequences of weighted outputs into one or multiple output variables.
